# EUROPÄISCHE PATENTSCHRIFT

(11) **EP 1 626 063 B1**
(45) Veröffentlichungstag und Bekanntmachung des Hinweises auf die Patenterteilung: **02.01.2008**
(21) Anmeldenummer: 05015600.9
(22) Anmeldetag: 19.07.2005
(51) Int. Cl.: C08K 3/34, C08L 75/04, C08L 71/02

(54) **Mischung enthaltend Schichtsilikat und Polyetheralkohol**
Mixture comprising layered silicate and polyether alcohol
Melange contenant silicate en couches et polyether alcool

(30) Priorität: 11.08.2004 DE 102004038985
(43) Veröffentlichungstag der Anmeldung: 15.02.2006
(73) Patentinhaber: BASF Aktiengesellschaft, 67056 Ludwigshafen (DE)
(72) Erfinder: Biedermann, Anja, Dr., 49356 Diepholz (DE); Pretzsch, Regina, 32351 Stemwede-Haldem (DE)

(56) Entgegenhaltungen:
- EP-A- 1 209 189
- WO-A-00/69957
- WO-A-03/059817
- DE-A1- 10 032 334

## Beschreibung

Die Erfindung betrifft Mischung enthaltend modifizierte Schichtsilikate (i), in die mindestens eine Verbindungen (ii) interkaliert ist, die keine gegenüber Isocyanatgruppen reaktiven Wasserstoffatome, insbesondere keine Hydroxylgruppen aufweist, sowie (b) Verbindungen mit gegenüber Isocyanatgruppen reaktiven Wasserstoffatomen, wobei die Verbindung (b) ein Polyetheralkohol ist mit einem Molekulargewicht größer 2000 g/mol, bevorzugt 3000 g/mol bis 12000 g/mol, und bevorzugt einer Funktionalität, besonders bevorzugt einer Anzahl an Hydroxylgruppen von 2 bis 8, der einen Endblock auf der Basis von Ethylenoxid aufweist und wobei der Gewichtsanteil des Endblocks auf der Basis von Ethylenoxid an dem Gesamtgewicht des Polyetheralkohols 10 Gew.-% bis 30 Gew.-%, besonders bevorzugt 10 Gew.-% bis 20 Gew.-% ist. Dabei bezieht sich die Gew.-%-Angabe auf den Gewichtsanteil der Struktureinheit -[O-CH₂-CH₂]- an dem Gesamtgewicht der Verbindung (b). Bei der Verbindung (b) beträgt der Gehalt an primären OH Gruppen bevorzugt mindestens 20 %, besonders bevorzugt mindestens 50 %, insbesondere mehr als 70 %. Außerdem bezieht sich die Erfindung auf Verfahren zur Herstellung von Polyurethanen und derart erhältliche Polyurethane, die bevorzugt exfolierte Schichtsilikate enthalten, bevorzugt elastomere Polyurethane mit einer Dichte zwischen 15 kg/m³ und 1250 kg/m³ oder Gießharze oder Hartschaumstoffe auf der Basis der erfindungsgemäß erhältlichen Polyurethane.

Der Einsatz von Schichtsilikaten in Polyurethanen ist bekannt. EP-A-1209189 beschreibt den Einsatz von Nanocomposites in PUR-Schaumstoffen. Die Clays dienen als Nucleierungsmittel und Gasbarriere mit dem Ergebnis der Verbesserung der Wärmeleitfähigkeit. Eine Exfolierung der Schichtsilikate erfolgt nicht.

In DE-A-10032334 wird der Einbau von silikathaltigen Nanofüllstoffen ohne Nachteile auf die Rohdichte beschrieben. Es wird offenbart, dass aufgeweiteten Schichtsilikate bei der PUR-Schaumstoffherstellung delaminiert und bevorzugt in den Zellstegen eingebaut werden. Als Schichtsilikat wurde Cloisite® 30 A verwendet, die Einarbeitung des Cloisite® 30 A erfolgt durch Einrühren in die A-Komponente und sofortiges Verschäumen mit dem Isocyanat. Ein Nachteil der hier offenbarten Füllstoffe ist, dass sie sich in der A-Komponente sehr schnell absetzen, was eine geringe Lagerstabilität der A-Komponente zu folge hat. Bei Cloisite® 30 A handelt es sich um Schichtsilikate, die hydroxyfunktionelle Verbindungen enthalten.

WO 03/059817 beschreibt eine Nanodispersion, die ein Schichtsilikat und eine Verbindung, die in das Schichtsilikat eingelagert ist, enthält. Die Dispersion wird als Füllstoff bei der Polyurethanschaumstoffherstellung verwendet. Als Schichtsilikat wird Cloisite® 30 A, somit ein OH-funktionelles Clay verwendet. Es zeigten sich hier sehr hohe Viskositäten, welche kaum zu verarbeiten sind, wodurch der unerwünschte Zusatz von Verdünnern oder Fließverbesserern notwendig wird.

Aufgabe der vorliegenden Erfindung war es, Füllstoffe zur Polyurethanherstellung bereit zu stellen, die einerseits eine lagerstabile Polyolkomponente gewährleisten und andererseits zu einer Verbesserung der mechanischen Eigenschaften führen. Dabei sollten die Füllstoffe den Verarbeitungsprozess bei der Polyurethanherstellung nicht wesentlich stören und einfach zu exfolieren sein.

Die Aufgabe konnte durch die eingangs dargestellte Mischung gelöst werden.

Die erfindungsgemäße Mischung weist gegenüber bekannten, Schichtsilikate enthaltenden Komponenten insbesondere die folgenden Vorteile auf:
- Gerade aufgrund der spezifischen Struktur der Polyetheralkohole mit dem erfindungsgemäßen Ethylenoxid (EO) - Endblock und dem erfindungsgemäßen Molekulargewicht wird eine sehr gute Exfolierung der Schichtsilikate erreicht.
- Die spezifische Struktur der Polyetheralkohole führt zu einer sehr guten Verträglichkeit mit den Schichtsilikaten.
- Aufgrund der Verbindungen (ii) in dem Schichtsilikat (i) kann gerade bei den spezifischen Polyetheralkoholen ein unerwünschter Viskositätsanstieg durch Zugabe der Schichtsilikate vermieden oder zumindest verringert werden. Durch diese gewünschte Viskositätserniedrigung ist es nunmehr möglich, deutlich höhere Anteile an Schichtsilikaten auch bei der maschinellen Herstellung von Polyurethanen einzusetzen. So können mit den erfindungsgemäßen Mischungen insgesamt bezogen auf das PUR-Material mehr als 0,5 Gew.-% der Schichtsilikate (i) enthaltend (ii) eingesetzt werden. Eine Erhöhung der Viskosität der Polyolkomponenten ist gerade bei der Herstellung von Polyurethane unerwünscht, da die Verarbeitung deutlich erschwert wird.

Bei dem Polyetheralkohol (b) kann es abgesehen von den erfindungsgemäßen Eigenschaften um allgemein bekannte Polyetheralkohole handeln die nach allgemein bekannten Verfahren hergestellt werden können. Besonders bevorzugt handelt es sich bei dem Polyetheralkohol (b) um ein Blockpolymer auf der Basis Propylenoxid mit endständigem Block auf der Basis Ethylenoxid. Ein solches Blockpolymer ist erhältlich durch Alkoxylierung einer Startsubstanz, bevorzugt mit 2 bis 8 Hydroxylgruppen, mit Propylenoxid und anschließender Alkoxylierung mit Ethylenoxid.

Als Schichtsilikate (i) können die aus dem Stand der Technik bekannten Silikatstrukturen mit zweidimensionalen Schichten aus SiO₄-Tetraedern eingesetzt werden (im Stand der Technik auch als Blatt- oder Phyllosilicate bekannt). Beispiele für geeignete Schichtsilikate sind Bentonit, Talk, Pyrophyllit, Glimmer, Serpentin, Kaolinit oder Gemische davon. Bevorzugt verwendet wird Bentonit.

Die erfindungsgemäßen Schichtsilikate (i) liegen modifiziert vor. Die Modifizierung besteht darin, dass zwischen den Schichten nach aus dem Stand der Technik bekannten Methoden die erfindungsgemäßen Verbindungen (ii) eingelagert, d.h. interkaliert sind. Die Einlagerung erfolgt durch Austausch der im Schichtgitter der Silikate enthaltenen Kationen durch die Verbindungen (ii). In einer bevorzugten Ausführungsform führt die Einlagerung der Verbindungen (ii) zu modifizierten Schichtsilikaten mit einem Schichtabstand von 1 bis 2 nm. Bevorzugt handelt es sich bei der Verbindung (ii) um eine quartäre Aminoverbindung, besonders bevorzugt sind Stearylbenzyldimethylammonium mit Gegenanion, insbesondere Stearylbenzyldimethylammoniumchlorid und/oder Stearylbenzyldimethylammoniumsulphat, insbesondere bevorzugt Stearylbenzyldimethylammoniumchlorid.

Die erfindungsgemäßen Schichtsilikate (i) enthaltend interkaliert die Verbindungen (ii) sind kommerziell bei Südchemie, Southern Clay, Nanocor und LY-TEC, Laviosa Chimica und den Marken Nanofil® 2, Nanofil® 32, Nanofil® 9, Nanofil® 919, Cloisite® 10A, , SCPX 1138, SCPX 439, Dellite® 43 B und weitere erhältlich.

Im allgemeinen werden die erfindungsgemäßen modifizierten Schichtsilikate (i) enthaltend (ii) in einer Menge von 0,1 bis 20 Gew.-%, bevorzugt von 0,5 bis 15 Gew.-%, besonders bevorzugt von 0,5 bis 10 Gew.-%, insbesondere von 0,8 bis 4 Gew.-%, bezogen auf das Gesamtgewicht der Polyolkomponente eingesetzt.

Eine weitere Aufgabe bestand in der Entwicklung eines Verfahrens zur Herstellung von bevorzugt exfolierte Schichtsilikate enthaltenden Polyurethanen, bevorzugt elastomere Polyurethane mit einer Rohdichte von 15 - 1250 kg/m³, Gießharze und Polyurethanhartschaumstoffen, durch Umsetzung von
(a) Isocyanaten mit
(b) Verbindungen mit gegenüber Isocyanatgruppen reaktiven Wasserstoffatomen, bevorzugt in Gegenart von Katalysatoren, gegebenenfalls Treibmittel und Zusatzstoffe wie z.B. Stabilisatoren. Bei dem Verfahren sollten insbesondere Komponenten eingesetzt werden, die einfach in der Handhabung und in der Prozessführung sind und zu Produkten mit verbesserten Eigenschaften führen.

Diese Aufgabe konnte dadurch gelöst werden, dass man zur Umsetzung die erfindungsgemäße Mischung einsetzt.

Verfahren zur Herstellung von Polyurethanen, beispielsweise kompakten oder zelligen Polyurethanen, thermoplastischen oder vernetzten Polyurethanen, weichen, halbharten oder harten Polyurethanschaumstoffen, z.B. Schuh, Weichintegral, Hartintegral, Energieabsorbierende Schaumstoffe, durch Umsetzung von (a) Isocyanaten mit (b) gegenüber Isocyanaten reaktiven Verbindungen, bevorzugt durch Umsetzung von (a) lsocyanaten mit (b) Verbindungen mit gegenüber Isocyanatgruppen reaktiven Wasserstoffatomen bevorzugt insbesondere bei der Herstellung von Schaumstoffen in Gegenwart von Katalysatoren (d), (c) Treibmittel und gegebenenfalls (e) Zusatzstoffen, besonders bevorzugt bei der Herstellung von Hartschaumstoffen in Gegenwart von Schaumstabilisatoren und Flammschutzmittel ist allgemein bekannt. Das erfindungsgemäße Verfahren zeichnet sich erfinderisch dadurch aus, dass man die Umsetzung in Gegenwart von den erfindungsgemäßen, eingangs ausführlich dargestellten Mischungen durchführt. Die Polyurethane können gegebenenfalls auch Isocyanurat oder andere aus der Isocyanatchemie allgemein bekannte Strukturen enthalten.

Zu den weiteren Komponenten (a) bis (e) ist im einzelnen folgendes zu sagen, wobei die einzelnen Ausgangsstoffe je nach gewünschtem Produkt variieren können. Die geeignete Wahl ist dem Fachmann bekannt.
(a) Als Polyisocyanate kommen die üblichen aliphatischen, cycloaliphatischen und insbesondere aromatischen Di- und/oder Polyisocyanate in Frage. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen. Zur Herstellung von Polyurethan-Hartschaumstoffen wird insbesondere Roh-MDI eingesetzt. Im Stand der Technik ist es gegebenenfalls üblich, Isocyanuratgruppen in das Polyisocyanat einzubauen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.
(b) Als Verbindungen mit mindestens zwei gegenüber Isocyanat reaktiven Gruppen, das heißt mit mindestens zwei mit Isocyanatgruppen reaktiven Wasserstoffatomen, werden erfindungsgemäß insbesondere die Verbindungen (b) der erfindungsgemäßen Mischung eingesetzt. Gegebenenfalls können zusätzlich zu den eingangs spezifizierten Polyetheralkohole weitere allgemein bekannte Verbindungen eingesetzt werden, die nachfolgend allgemein beschrieben werden. Als Verbindungen mit mindestens zwei gegenüber Isocyanat reaktiven Gruppen kommen insbesondere solche in Frage, die zwei oder mehrere reaktive Gruppen, ausgewählt aus OH-Gruppen, SH-Gruppen, NH-Gruppen, NH₂-Gruppen und CH-aciden Gruppen, wie z.B. β-Diketo-Gruppen, in Molekül tragen.

Zur Herstellung der Polyurethane kommen insbesondere Verbindungen mit 2 bis 8 OH-Gruppen zum Einsatz. Vorzugsweise eingesetzt werden Polyetherole und/oder Polyesterole. Die Hydroxylzahl der verwendeten Polyetherole und/oder Polyesterole beträgt üblicherweise 20 bis 850 mgKOH/g, die Molekulargewichte sind vorzugsweise größer als 400 g/mol. Bevorzugt enthält Komponente (b) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht Glycerin, Trimethylolpropan, Pentaerythrit, Sacharose, Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine. Ferner kann die Komponente (b) optional Polyesterole, Kettenverlängerungs- und/oder Vernetzungsmitteln enthalten. Als Kettenverlängerungs- und/oder Vernetzungsmittel kommen insbesondere zwei- oder dreifunktionelle Amine und Alkohole, insbesondere Diole und/oder Triole mit Molekulargewichten kleiner als 400 g/mol, vorzugsweise von 60 bis 300, zum Einsatz.

Als Treibmittelkomponente (c) wird bevorzugt Wasser eingesetzt zur Herstellung von Schaumstoffen. Es kann aber auch Kohlenwasserstoffe eingesetzt. Diese können im Gemisch mit Wasser und/oder weiteren physikalische Treibmittel eingesetzt werden. Darunter versteht man Verbindungen, die in den Einsatzstoffen der PolyurethanHerstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Die Treibmittelkomponente (c) setzt man bevorzugt in einer Menge von 2 bis 45 Gew.-%, bevorzugt 4 bis 30 Gew.-%, besonders bevorzugt 5 bis 20 Gew.-%, bezogen auf das Gesamtgewicht der Komponenten (b) bis (e) ein. Es ist ferner bevorzugt, dass die Treibmittel-Komponente (c) weniger als 5 Gew.-%, mehr bevorzugt weniger als 2 Gew.-%, besonders bevorzugt weniger als 1 Gew.-%, insbesondere 0 Gew.%, bezogen auf das Gesamtgewicht der Komponenten (b) bis (e), an Fluorchlorkohlenwasserstoffen, Chlorkohlenwasserstoffen oder Fluorkohlenwasserstoffen enthält. In einer bevorzugten Ausführungsform enthält das Treibmittelgemisch (c) somit ausschließlich Kohlenwasserstoffe. Besonders bevorzugte Kohlenwasserstoffe sind n-Pentan, Cyclopentan, iso-Pentan und/oder Mischungen der Isomeren. Insbesondere wird n-Pentan als Treibmittel (c) verwendet.

Als Katalysatoren (d) können aus der Polyurethanchemie allgemein bekannte Katalysatoren (d) eingesetzt werden, insbesondere Verbindungen, die die Reaktion der reaktiven Wasserstoffatome, insbesondere hydroxylgruppenenthaltender Verbindungen mit den organischen, gegebenenfalls modifizierten Polyisocyanaten stark beschleunigen. Beispielsweise kommen in Betracht: organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat, und die Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen können allein oder in Kombination mit stark basischen Aminen eingesetzt werden. Genannt seien beispielsweise Amidine, wie 2,3-Dimethyl-3,4,5,6-tetrahydropyrimidin, tertiäre Amine, die wie Triethylamin, Tributylamin, Dimethylbenzylamin, N-Methyl-, N-Ethyl-, N-Cyclohexylmorpholin, N,N,N',N'-Tetramethylethylendiamn, N,N,N',N'-Tetramethylbutandiamin, N,N,N',N'-Tetramethylhexandiamin-1,6, Bis-(dimethyldiethylaminoethyl)ether, Pentamethyldiethylentriamin, Tetramethyldiaminoethylether, Bis-(dimethylaminopropyl)-hamstoff, Dimethylpiperazin, 1,2-Dimethylimidazol, 1-Aza-bicyclo-(3,3,0)-octan, und Aminoalkanolverbindungen, wie Triethanolamin, Triisopropanolamin, N-Methyl- und N-Ethyldiethanolamin und Dimethylethanolamin als Treibkatalysatoren, die neben der Gelreaktion insbesondere die Reaktion des Isocyanates mit dem Wasser favorisieren. Als Gelkatalysator finden Diazabicycloundecan, 1,4-Diazabicyclo-(2,2,2)-octan (Dabco), 1-methylimidazol und vorzugsweise Dimethylcyclohexylamin Verwendung. Diese Katalysatoren beschleunigen die Reaktion des Isocyanates mit den Polyolen. Gegebenenfalls können auch die Polyisocyanuratreaktion unterstützende allgemein bekannter Katalysator (PIR-Katalysator) eingesetzt werden. Vorzugsweise werden Alkali- und/oder Erdalkalimetallverbindungen, insbesondere Alkalimetallsalze, wie beispielsweise Kaliumacetat, Kaliumoctoat und Kaliumformiat, verwendet. Vorzugsweise eingesetzt wird Kaliumacetat. Weitere erfindungsgemäß zu verwendende Alkali- und/oder Erdalkalimetallverbindungen sind u.a. Alkalihydroxid, wie Natriumhydroxid, und Alkalialkoholate, wie Natriummethylat und Kaliumisopropylat, sowie Alkalisalze von langkettigen Fettsäuren mit 10 bis 20C-Atomen und gegebenenfalls seitenständigen OH-Gruppen. In Frage kommen auch andere bekannte PIR-Katalysatoren, wie Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid. Insgesamt beträgt die Gesamtmenge an Katalysator, bezogen auf das Gewicht der Aufbaukomponenten (b) bis (e), vorzugsweise weniger als 8 Gew.-%, insbesondere weniger als 5 Gew.-%.

Die Umsetzung von (a) mit (b) erfolgt gegebenenfalls in Anwesenheit von (e) Zusatzstoffen, wie z.B. Flammschutzmittel, Füllstoffen, Zellreglern, Zellöffner, Schaumstabilisatoren, oberflächenaktiven Verbindungen und/oder Stabilisatoren gegen oxidativen, thermischen oder mikrobiellen Abbau oder Alterung, bevorzugt Flammschutzmittel und/oder Schaumstabilisatoren. Als Schaumstabilisatoren werden Stoffe bezeichnet, welche die Ausbildung einer regelmäßigen Zellstruktur bei der Schaumbildung fördern. Beispielsweise sind genannt: Siliconhaltige Schaumstabilisatoren, wie Siloxan-Oxalkylen-Mischpolymerisate und andere Organopolysiloxane. Ferner alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A. Als Alkoxylierungsreagenzien können beispielsweise Ethylenoxid, Propylenoxid, Poly-THF sowie höhere Homologe verwendet werden. Als Flammschutzmittel können im allgemeinen die aus dem Stand der Technik bekannten Flammschutzmittel verwendet werden. Geeignete Flammschutzmittel sind beispielsweise bromierte Ether (Ixol), bromierte Alkohole wie Dibromneopentylakohol, Tribromneopentylalkohol und PHT-4-Diol sowie chlorierte Phosphate wie z.B. , Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat. Außer den bereits genannten halogensubstituierten Phosphaten können auch anorganische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PU-Hartschaumstoffe verwendet werden. Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden. Die Flammschutzmittel werden im Rahmen der vorliegenden Erfindung bevorzugt in einer Menge von 0 bis 65 Gew.-%, besonders bevorzugt von 10 bis 65 Gew.-%, insbesondere von 15 bis 60 Gew.-%, insbesondere bevorzugt zwischen 20 bis 50 Gew.-%, bezogen auf das Gesamtgewicht der Komponenten (b) bis (e) verwendet.

Nähere Angaben über die oben genannten und weitere Ausgangsstoffe sind der Fachliteratur, beispielsweise dem Kunststoffhandbuch, Band VII, Polyurethane, Carl Hanser Verlag München, Wien, 1., 2. und 3. Auflage 1966, 1983 und 1993, zu entnehmen.

Zur Herstellung der Polyurethane werden die Polyisocyanate (a) und die Komponenten (b) bis gegebenenfalls (e) üblicherweise in solchen Mengen zur Umsetzung gebracht, dass die Isocyanat-Kennzahl 60 bis 400, beträgt. Die für jedes Polyurethanprodukte bevorzugte Kennzahl ist dem Fachmann bekannt und in den einschlägigen Fachbüchern beschrieben.

Die Herstellung der Polyurethanprodukte ist aus der Literatur allgemein bekannt und kann diskontinuierlich oder kontinuierlich mit Hilfe bekannter Verfahren (z. B. Doppelband bei Hartschaumelementen) hergestellt werden.

Als besonders vorteilhaft hat es sich erwiesen, nach dem Zweikomponenten-Verfahren zu arbeiten und die erfindungsgemäße Mischung, gegebenenfalls mit weiteren Verbindungen (b) mit mindestens zwei mit Isocyanatgruppen reaktiven Wasserstoffatomen, zusammen mit den Treibmitteln (c), den Katalysatoren und gegebenenfalls den Zusatzstoffen zu einer sogenannten Polyolkomponente (in dieser Schrift auch vorstehend als Polyolkomponente bezeichnet) zu vereinigen und diese mit den Polyisocyanaten oder Mischungen aus den Polyisocyanaten und gegebenenfalls Treibmitteln, auch als Isocyanatkomponente bezeichnet, zur Umsetzung zu bringen.

Durch Umsetzung der erfindungsgemäßen Mischung enthaltend die modifizierten Schichtsilikate mit der Polyisocyanatkomponente werden die Schichtsilikate exfoliert und als exfolierte Schichtsilikate in die Polyurethanmatrix eingebaut. Unter "exfoliert" wird im allgemeinen verstanden, dass der Schichtabstand der Silikatschichten derart groß ist oder dass die Schichten derart unregelmäßig angeordnet sind, so dass mit den üblichen Meßmethoden kein Schichtabstand mehr bestimmt werden kann. Die genannten Polyurethanschaumstoffe finden bevorzugt als Formschaum, Spritzschaum und Dämmelemente; Weichintegralprodukte, Lenkräder, Matratzen, Schuhsohlen Verwendung. Die kompakten Gießharze, Gießelastomere und kompakten PUR Materialien kommen bevorzugt als PUR-Vergußmasse, Büro-, Krankenhaus-, Schuh- und Haushaltsmöbel, Dichtungen, Räder, Rollen, Molche und als Laufbahn, Industriehallenboden und Siebelementen zum Einsatz.

Die nachfolgenden Beispiele veranschaulichen die vorliegende Erfindung.

### Beispiele:

Die Clays Nanofil® 9, Nanofil® 919, Nanofil® 32, Nanofil® 2, Cloisite® 10A, Cloisite® SCPX 439, Dellite® 43B wurden wie folgt in die Polyole eingearbeitet: Die entsprechende Menge Clay wird 6 - 7 Stunden bei 70°C mittels Laborrührwerk IKA RW 20 bei 600 u/min verrührt. Nachdem das Gemisch 15-20 Stunden bei 70°C im Trockenschrank gelagert wird, wird es noch mindestens 4 Minuten mit einem IKA Ultraturax Mixer T 50 bei 4000u/min gerührt. In folgende Polyole die in der Tabelle 1 charakterisiert sind fand diese Einarbeitung der Clays statt.

**Tabelle 1:**

| Beispiel | Polyolstruktur | Funktionalität des Starters | Molmasse [g/Mol] | EO-Gehalt [%] | Polymerisationart |
|---|---|---|---|---|---|
| 1 | Sorbit - PO - EO | 6 | 11000 | 10 | Block |
| 2 | Glycerin - PO - EO | 3 | 5400 | 14 | Block |
| 3 | Propylenglykol - PO - EO | 2 | 3400 | 18,5 | Block |
| 4 | Glycerin - PO - EO | 3 | 5300 | 21 | Block |
| 5 | Glycerin - PO/EO - EO | 3 | 2800 | 10,2 | Statistik/ Endblock |
| 6 | Dipropylenglykol - PO - EO/ PO - EO | 2 | 2700 | 30 | Block/ Statistik/ Endblock |
| 7 | Glycerin - EO/PO - EO | 3 | 3500 | 72,5 | Statistik/ Endblock |
| 8 | Glycerin - EO - PO | 3 | 1050 | 7,5 | Block |
| 9 | Glycerin - EO | 3 | 310 | 70 | Block |
| 10 | Glycerin - PO | 3 | 450 | 0 | Block |
| 11 | Sorbit - PO | 6 | 565 | 0 | Block |
| 12 | Saccharose/ Glycerin - PO | 4,5 | 500 | 0 | Block |
| 13 | N,N-Dimethyldipropylentriamin- PO-EO | 3 | 4030 | 13,3 | Block |

Der in der Tabelle 1 dargestellten Polyole wurden mit den Schichtsilikaten Nanofil® 9 und 919 versetzt und diese wie oben beschrieben eingearbeitet. Eine Charakterisierung und Bewertung dieser Muster (sowohl bei 3 Teile, 5 Teile) ist in Tabelle 2 dargestellt.

**Tabelle 2:**

| Beispiel | Optischer Eindruck der Verträglichkeit | WAXS */SAXS Signal | Bewertung |
|---|---|---|---|
| 1 | sehr gut | nein | +++ |
| 2 | sehr gut | nein | +++ |
| 3 | sehr gut | nein | +++ |
| 4 | sehr gut | nein | +++ |
| 5 | befriedigend | Undeutlich | + |
| 6 | befriedigend | undeutlich | + |
| 7 | ungenügend | Ja | - |
| 8 | ungenügend | Ja | - |
| 9 | ungenügend | Ja | - |
| 10 | ungenügend | Ja | - |
| 11 | ungenügend | Ja | - |
| 12 | ungenügend | Ja | - |
| 13 | sehr gut | nein | +++ |

Anmerkungen:
- Ein Signal im Bereich von 2 bis 20 ° auf der 2 Θ Skale des Weitwinkelröntgendiagramms (WAXS) ist ein Hinweis auf einen Schichtreflex; erkennt man kein Signal im Winkelbereich 2 - 10 ° so ist das ein Hinweis, dass die Schichtsilikate exfoliert sind. Analog gilt für SAXS Messungen der Winkelbereich 0,3 < 2 Θ < 3 °. Ist hier kein eindeutiges Schichtreflex-Signal zu erkennen, so bestätigt dies die WAXS Messungen und die Schichtsilikate liegen weitestgehend exfoliert vor..
- Die Angabe ungenügende Verträglichkeit (symbolisiert mit ungenügend bis befriedigend) bedeutet, dass sich das eingearbeitete Schichtsilikat absetzt bzw. sedimentiert und somit eine Exfolierung unmöglich ist.

Die Mischungen mit Polyol 1 - 4 betrachtet im Lichtmikroskop zeigten keine Partikelgrößen > 1 µm. Röntgenuntersuchungen mittels WAXS und SAXS zeigen keine Signale der Schichtreflexe, als gepackte Clays, eine weitestgehende Exfolierung wurde erreicht.

Die Wirkung verschiedener Schichtsilikate, insbesondere der Einfluss der interkalierten Verbindungen, wurde anhand der folgenden Beispiel untersucht. Dabei wurden die Polyole 2 bis 4 aus Tabelle 1 eingesetzt. In den Tabellen 3 und 4 ist die Viskosität der Mischung dargestellt. Es wurde in einem Rotationsviskosimeter der Firma Haake VT 500, der Firma bei T= 25°C gemessen. Die Mischungen wurden dabei vorher mindestens 20 min temperiert.

**Tabelle 3: Viskosität in mPas der Polyole aus Beispiel 3 der Tabelle 1 und 2 mit unterschiedlichen Clays und Mengen (Messung Stufe 3)**

| | 3 Gew.-% Schichtsilikat | 3,5 Gew.-% Schichtsilikat | 4 Gew.-% Schichtsilikat |
|---|---|---|---|
| Closite® 30B | 2570 | | |
| Nanofil® 9 | 1730 | 2040 | 2690 |
| Nanofil® 919 | 1820 | 4330 | 4460 |
| Nanofil® 1485 | 3050 | | |

**Tabelle 4: Viskosität in mPas des Polyol aus Beispiel 2 der Tab.1 und 2 bei unterschiedlichen Clays und Mengen (Messung Stufe 3)**

| | 3 Gew.-% Schichtsilikat | 3,5 Gew.-% Schichtsilikat | 4 Gew.-% Schichtsilikat |
|---|---|---|---|
| Closite® 30B | 4440 | | |
| Nanofil® 9 | 2690 | 2960 | 3710 |
| Nanofil® 919 | 2310 | 4270 | 6590 |
| Nanofil® 1485 | 3120 | | |

**Tabelle 5: Viskosität in mPas des Polyols aus Beispiel 4 der Tab.1 und 2 mit unterschiedlichen Clays (Messung Stufe 3)**

| | 3 Gew.-% Schichtsilikat |
|---|---|
| Closite® 30B | 4520 |
| Nanofil® 9 | 2760 |
| Nanofil® 919 | 3240 |
| Nanofil® 1485 | 6020 |

Die Clays wurden von Südchemie oder Southern Clay bezogen. Closite® 30B und Nanofil® 1485 stellen keine erfindungsgemäßen Schichtsilikate dar, da sie quartemäre Aminoverbindungen mit hydroxy-funktioneller Endgruppe als interkalierte Verbindungen enthalten.

Aus den vorstehenden Ergebnissen zeigt sich, dass gerade die erfindungsgemäßen Polyetherole besonders geeignet sind zum gemeinsamen Einsatz mit den Schichtsilikaten: Die Exfolierung der Schichtsilikate zeigt sich besonders bei Polyetherolen mit Molmassen > 2000 g/Mol und einem EO-Endblock ≥ 10 %. Besondere Vorteile sind bei EO - PO Blockpolymere gegeben. Eine statistische Verteilung der Monomeren ist weniger günstig.

Die Polyole enthaltend die nicht-OH-funktionellen Schichtsilikate zeigen eine deutlich geringere Viskosität, sind dabei besser verarbeitbar, d.h. man kann sie in größeren Mengen einsetzen und man erhält verbesserte mechanische Kennwerte. Besondere Vorteile ergeben sich bei Verwendung von Schichtsilikaten die Stearylbenzyldimethylammoniumchlorid als interkalierte Substanz enthalten.

Die Viskositäten (in mPas) der Polyole 2-4 zeigten thixotropes Verhalten. Dabei verhält sich die Flüssigkeit nicht Newtonsch und ändert ihre Viskosität mit der Scherung. Daher wurde die Viskosität scherratenabhängig bestimmt, was durch die einzelnen Stufen in Tab. 3-8 zum Ausdruck kommt. Der Bezug Geschwindigkeitsgefälle in 1/s zur Stufe des Gerätes ist in Tabelle 9 aufgeführt.

**Tab.6: Viskositäten [mPas] des Polyols 3 mit unterschiedlichen Clays und Mengen gemessen mit Stufe 1**

| | 3 Gew.-% Schichtsilikat | 3,5 Gew.-% Schichtsilikat | 4 Gew.-% Schichtsilikat |
|---|---|---|---|
| Closite® 30B | 4120 | | |
| Nanofil® 9 | 1940 | 2670 | 3770 |
| Nanofil® 919 | 2110 | 7470 | 7840 |
| Nanofil® 1485 | 5030 | | |

**Tab.7: Viskositäten [mPas] des Polyols 2 mit unterschiedlichen Clays und Mengen gemessen mit Stufe 1**

| | 3 Gew.-% Schichtsilikat | 3,5 Gew.-% Schichtsilikat | 4 Gew.-% Schichtsilikat |
|---|---|---|---|
| Closite® 30B | 6820 | | |
| Nanofil® 9 | 2780 | 3760 | 4780 |
| Nanofil® 919 | 2300 | 5690 | 11100 |
| Nanofil® 1485 | 4450 | | |

**Tab.8: Viskositäten [mPas] des Polyols 3 mit unterschiedlichen Clays gemessen mit Stufe 1**

| | 3 Gew.-% Schichtsilikat |
|---|---|
| Closite® 30B | 7010 |
| Nanofil® 9 | 3290 |
| Nanofil® 919 | 4410 |
| Nanofil® 1485 | 10400 |

**Tabelle 9.: Scherratenabhängigkeit der Viskosität: Geschwindigkeitsgefälle in Abhängigkeit von der am Gerät eingestellten Stufe**

| Stufe 1 | Stufe 2 | Stufe 3 | Stufe 4 | Stufe 5 | Stufe 6 |
|---|---|---|---|---|---|
| Geschwindigkeitsgefälle in 1/s | | | | | |
| 6,45 | 10,7 | 17,9 | 29,92 | 58,43 | 83,33 |

Erfindungsgemäß kann somit aufgrund der signifikant verringerten Viskosität eine deutlich größere Menge an Clay eingearbeitet werden. Die nicht OH funktionellen Clays bieten somit in Kombination mit den erfindungsgemäßen Polyolen erhebliche Vorteile hinsichtlich Verarbeitungsbandbreite.

In den folgenden Beispielen wurden Mischungen enthaltend Polyole und Schichtsilikate mit Isocyanaten zu Polyurethanprodukten umgesetzt.

### Beispiel zur Herstellung eines kompaktem PUR-Materials

### A-Komponente:

- 6,00 g: Rizinusöl (DAB-Qualität)
- 49,98 g: Polyol 3 (gemäß Tab.1)
- 3 Tropfen: Dabco® 33 LV (Air Products)

In Polyol 3 (gemäß Tab.1) wurde das entsprechende Clay (5 Teile) gemäß obigen Procedere eingearbeitet. Es erfolgte eine Umsetzung mit der B-Komponente durch Handverrühren von A und B-Komponente mit Kennzahl 100. Das Reaktionsgemisch wurde mit einem Vollrath-Rührer mit einer Drehzahl bei 1800 Umdrehungen pro Minute gerührt. In dem hergestellten kompakten PUR-Material befanden sich 3,9% Clay.

### B-Komponente:

- 6,00 g: Lupranat® M 20 S (Polymer MDI, BASF Aktiengesellschaft)

Es wurden 100 µm dicke Folien mittels eines handelsüblichen Ziehknochens gezogen und diese bei 70°C übemacht getempert. Anschließend wurden Modul Messungen (temperaturabhängig) im Zugmodus an einer Maschine Rheometrics Solids Analyzer RSA II durchgeführt. Messparameter: Frequenz: 1,0 Hz, Anfangstemperatur: - 130 °C, Endtemperatur 190°C, Rampe: 5°C/min.
Die Probe hatte folgende Geometrie: Rechteckgeometrie: l:21.75 mm, b: 10,45 mm,
d: 0,05 mm.
Außerdem wurden Zugversuche an einer Maschine Zwick nach DIN 53504; S2 durchgeführt.

**Tab.10: Modulmessungen und Ergebnisse von Schubmodul bei 2 Temperaturen**

| Clay | E' (20°C) [Pa] | E' (50°C) [Pa] |
|---|---|---|
| | | |
| Ohne Schichtsilikat | 3,02 10⁶ | 3,14 10⁶ |
| Cloisite® 30B | 7,28 10⁶ | 7,66 10⁶ |
| Nanofil® 919 | 7,09 10⁶ | 7,3 10⁶ |
| Nanofil® 1485 | 6,51 10⁶ | 7,01 10⁶ |

Es zeigt sich, dass das Modul sowohl bei 20°C als auch 50°C bei den Schichtsilikaten deutlich höher ist und somit die Steifigkeit um mehr als das 2fache steigt. Gleichzeitig sieht man an der folgenden Tabelle, dass die Bruchkraft und auch die Bruchdehnung verbessert ist. D.h. sowohl die Steifigkeit als auch die Zähigkeit ist deutlich verbessert.

**Tab.11: Zugversuche und Auswertung von modul, Bruchkraft (σbreak, Bruchdehnung εbreak, s Streubreite)**

| | E modul [MPa] | s [MPa] | σ break [MPa] | s [MPa] | ε break [%] | s [%] |
|---|---|---|---|---|---|---|
| ohne Clay | 2,66 | 0,235 | 1,68 | 0,000 | 115 | 37,21 |
| Nanofil® 919 | 4,27 | 0,74 | 3,47 | 0,51 | 202 | 41,2 |
| Nanofil® 1485 | 4,46 | 0,433 | 5,34 | 0,995 | 217 | 73,9 |
| Cloisite® 25° | 4,45 | 0,520 | 2,84 | 1,080 | 141 | 42,3 |
| Cloisite® 30B | 4,71 | 0,415 | 5,42 | 1,120 | 201 | 42,3 |

### Beispiel zur Herstellung eines Weichintegralschaumstoff

Im folgenden Beispiel wurden Weichintegralschaumstoffe mit den Polyolen enthaltend die Schichtsilikate hergestellt.

Die A-Komponente enthält folgende Bestandteile:
- 85,14 Teile: Polyol 4 (gemäß Tab.1)
- 8,79 Teile: Monoethylenglykol
- 2,73 Teile: 1,4-Butandiol

- 0,05 Teile: Zinn-Katalysator, Tinstab OTS-17D® Acros Chemicals

- 1,40 Teile: Amin-Katalysator, Lupragen® N 203® (BASF Aktiengesellschaft)
- 0,4 Teile: Amin-Katalysator, Lupragen® N 206® (BASF Aktiengesellschaft)
- 1,5 Teile: Wasser

Das Schichtsilikat (2,5 T Nanofil® 919) wurde in Polyol 4 (der Tab.1) gemäß obigen Procedere eingerührt. Der Schaum enthielt ca. 0,93 T Clay.

Die B-Komponente enthält folgende Bestandteile:
ISO 137/28®: Isocyanat-Prepolymere der Firma Elastogran auf Basis von 4,4'-MDI, einem Polyether-Polyol und ggf. Zusatz von niedermolekularen Diolen, NCO-Gehalt=18,0%.

Bei allen Versuchen wurden Schäume mit Dichten von 250 bis 300 g/l hergestellt. Alle Versuche wiesen vergleichbare Startzeiten, Steigzeiten und Knickzeiten auf. Die Dimensionsstabilität nach Entformung ist bei allen Versuchen vergleichbar.

**Tab12: Eigenschaften der Weichintegralschaumstoffe**

| Kennwerte | Standardsystem ohne Clay | mit Cloisite 30® B Vergleich OH-funktionalisiert | mit Nanofil® 919 erfindungsgemäß nicht OH funktionalisiert |
|---|---|---|---|
| Zugfestigkeit [N/mm²] | 1,6 | 1,6 | 1,6 |
| Dehnung [%] | 220 | 210 | 210 |
| Weiterreißfestigkeit [N/mm] | 7,5 | 7 | 7,5 |
| Härte [Shore A] | 34 | 35 | 36 |

**Tab.13: Viskosität [mPas] mit Stufe 3 gemessen mit Polyol 4 (nach Tab.1):**

| ohne Clay | mit 3 % Cloisite® 30 B | mit 3 % Nanofil® 919 |
|---|---|---|
| 1225 | 4520 | 3240 |

### Beispiel zur Herstellung energieabsorbierender Schaumstoffe

Die A-Komponente enthält folgende Bestandteile:
- 69,3 Teile: Polyol 2 (Tab.1)
- 3 Teile: Polypropylenglykol OHZ = 245
- 23 Teile: Polyol 11 (Tab.1)

- 0,2 Teile: Amin-Katalysator, Lupragen® N 101® (BASF Aktiengesellschaft)
- 1,5 Teile: Amin-Katalysator, Lupragen® N 201® (BASF Aktiengesellschaft)
- 3,0 Teile: Wasser

Als Isocyanatkomponente wurde polymeres MDI mit einem NCO von 31 % und einer Viskosität von 200 mPa s ^{25°}C eingesetzt (Lupranat® M20 der BASF Aktiengesellschaft)
Gearbeitet wurde mit einem Index von 105.

Es wurde ein Polyurethanschaumstoff durch Handverschäumen aus 100 Gew.-Teilen A-Komponente und 85 Teilen B-Komponente hergestellt. Das Reaktionsgemisch wird mit einem Scheibenrührer der Fa. Vollrath mit einer Drehzahl von ca. 1800 Umdrehungen pro Minute gerührt. In Polyol 2 (Tab.1) aus der Grundrezeptur wurden 2,21 Teile Schichtsilikat eingearbeitet, was einen Gehalt von 1 % im Schaumstoff ergibt.

Der Schaumstoff enthaltend das Schichtsilikat Nanofil® 919 hat mit 13 % eine verbesserte Bruchdehnung gegenüber 10 % Bruchdehnung des Schaumstoffes ohne Schichtsilikat. Ebenfalls ist die Zugfestigkeit deutlich besser. Insbesondere sind die mechanischen Eigenschaften mit den nicht OH-funktionellen Clays deutlich besser als mit hydroxy-funktionellen Clays. D.h. sowohl die Steifigkeit als auch die Zähigkeit ist deutlich verbessert.

| | Nullmuster | Cloisite 30B | Nanofil 919 |
|---|---|---|---|
| Bruchdehung [%] | 10 | 7 | 13 |
| Zugfestigkeit [N/mm2] | 0,315 | 0,266 | 0,390 |

Die Untersuchungen über Röntgenbeugung zeigen im WAXS und SAXS beim Polyetherol, wie beim Schaumstoff keine Signale für einen Schichtreflex, dies weist auf eine Exfolierung der Schichtsilikate hin.

Durch die deutlich geringere Viskosität der Abmischung Polyol 2 mit Nanofil® 919 (2210 mPa s Stufe 3) zu Polyol 1 mit Cloisite® 30 B (3780 mPa s, Stufe 3) kann ein erhöhter Füllgrad an Nanofil® 919 erreicht werden und somit eine weitere Verbesserung der Bruchdehnung erreicht werden.

### Beispiel zur Herstellung eines geschäumten Gießelastomers

Nach der unten beschriebenen Rezeptur wurden Platten 40 x 200 x 200 mm hergestellt. Diese wurden nach 2-3 Stunden in der Schäumform bei 70°C entformt. In die Polyolkomponente wurden 5 % Clay eingearbeitet, so dass die geschäumten Platten 3,3 % Clay enthalten. Geprüft wurden die Platten nach der DIN 53504.
- 49,89 T: Polyol 2 (Tab.1)
- 5 T: Lupranol® 3423 (BASF Aktiengesellschaft)
- 6 T: Rizinusöl
- 0,1 T: Lupragen® N 201 (BASF Aktiengesellschaft)
- 1 T: Tegostab B 8467 (Th.Goldtschmidt)
- 0,1 T: Wasser
- 1 T: CP70

**Tab.14: Eigenschaften des geschäumten Gießelastomers**

| Kennwerte | Standard-system ohne Clay | mit Cloisite® 30 B OH-funktionalisiert Vergleich | mit Nanofil® 9 nicht OH funktionalisiert erfindungsgemäß |
|---|---|---|---|
| Rohdichte [g/l] | 452 | 478 | 470 |
| Härte [Shore A] | 30 | 39 | 39 |
| Zugfestigkeit [kPa] | 297 | 551 | 525 |
| Zugfestigkeit [N/mm²] | 0,3 | 0,7 | 0,6 |
| Dehnung[%] | 27 | 35 | 36 |
| Rückprallelastizität [%] | 51 | 49 | 47 |

Durch die erfindungsgemäßen Mischungen konnte eine deutliche Verbesserung der mechanischen Kennwerte gegenüber dem Standardsystem erreicht werden. Durch die deutlich geringere Viskosität der Abmischung des Polyols mit Nanofil® 919 (2210 mPas- Stufen3) gegenüber Cloisite® 30 B (3780 mPa s- Stufe 3) kann ein erhöhter Füllgrad an Nanofil® 919 erreicht werden und somit eine weitere Verbesserung der mechanischen Kennwerte.

### Beipiel PIR-Hartschaum

Die A-Komponente enthält folgende Bestandteile:
- 92,6 Teile: Polyol 2 (Tab.1) enthält 3 % Nanofil 919
- 4,0 Teile: KX 324 (BASF Aktiengesellschaft)
- 0,1 Teile: Amin-Katalysator, Lupragen® N 600 (BASF Aktiengesellschaft)
- 2,0 Teile: Tegostab B 8455 der Fa. Goldschmidt
- 1,6 Teile: Wasser
- 6 Teile: Cyclopentan

Die B-Komponente ist Polymer MDI mit einem NCO von 31 % und einer Viskosität von 200 mPa s 25°C d.h. es wurde Lupranat® M20S der BASF Aktiengesellschaft verwendet.
Gearbeitet wurde mit einem Index von 300.

Es wurde ein Polyurethanschaumstoff durch Handverschäumen aus 106,3 Gew. Teilen A- Komponente und 160 Teilen B-Komponente hergestellt. Das Reaktionsgemisch wird mit einem Scheibenrührer der Fa. Vollrath mit einer Drehzahl von ca. 1800 Umdrehungen pro Minute gerührt.

Es wurden 3 T Nanofil® 919 in Polyol 2 (Tab 1) eingerührt. Im Schaumstoff beträgt die Clay Menge 1,18 T. Im Schaumstoff konnte kein WAXS/ SAXS Signal gefunden werden.

| | Ohne Clay | Mit Nanofil® 919 |
|---|---|---|
| Startzeit [s] | 7 | 6 |
| Abbindezeit | 33 | 27 |
| Steigzeit | 65 | 46 |
| RD [g/l] | 49,7 | 49,9 |

## Patentansprüche

1. Mischung enthaltend (a) modifizierte Schichtsilikate (i), in die mindestens eine Verbindungen (ii) interkaliert ist, die keine gegenüber isocyanatgruppen reaktiven Wasserstoffatome aufweist, sowie (b) Verbindungen mit gegenüber Isocyanatgruppen reaktiven Wasserstoffatomen, **dadurch gekennzeichnet, dass** die Verbindung (b) ein Polyetheralkohol mit einem Molekulargewicht größer 2000 g/mol ist, der einen Endblock auf der Basis von Ethylenoxid aufweist und wobei der Gewichtsanteil des Endblocks auf der Basis von Ethylenoxid an dem Gesamtgewicht des Polyetheralkohols 10-30 Gew.-% ist und es sich bei der Verbindung (ii) um eine quartäre Aminoverbindung handelt.

2. Mischung gemäß Anspruch 1, **dadurch gekennzeichnet, dass** der Polyetheralkohol (b) ein Blockpolymer auf der Basis Propylenoxid mit endständigem Block auf der Basis Ethylenoxid ist.

3. Mischung gemäß Anspruch 1, **dadurch gekennzeichnet, dass** es sich bei der Verbindung (ii) um eine quartäre Aminoverbindung ohne hydrophile Endgruppe handelt.

4. Mischung gemäß Anspruch 1, **dadurch gekennzeichnet, dass** es sich bei der Verbindung (ii) um Stearylbenzyldimethylammonium mit Gegenanion handelt.

5. Verfahren zur Herstellung von Schichtsilikate enthaltenden Polyurethanen durch Umsetzung von
(a) Isocyanaten mit
(b) Verbindungen mit gegenüber Isocyanatgruppen reaktiven Wasserstoffatomen,
**dadurch gekennzeichnet, dass** man zur Umsetzung eine Mischung gemäß einem der Ansprüche 1 bis 4 einsetzt.

6. Polyurethane erhältlich durch ein Verfahren gemäß Anspruch 5.

7. Elastomere Polyurethane gemäß Anspruch 6 mit einer Dichte zwischen 15 kg/m³ und 1250 kg/m³.

8. Gießharze oder Hartschaumstoffe auf der Basis von Polyurethanen gemäß Anspruch 6.

## Claims

1. A mixture comprising (a) modified sheet silicates (i) into which at least one compound (ii) having no hydrogen atoms which are reactive toward isocyanate groups has been intercalated and (b) compounds having hydrogen atoms which are reactive toward isocyanate groups, wherein the compound (b) is a polyether alcohol which has a molecular weight greater than 2000 g/mol and has an end block based on ethylene oxide, where the proportion by weight of the end block based on ethylene oxide in the polyether alcohol is 10-30% by weight of the total weight of the polyether alcohol and the compound (ii) is a quaternary amino compound.

2. The mixture according to claim 1, wherein the polyether alcohol (b) is a block polymer based on propylene oxide having a terminal block based on ethylene oxide.

3. The mixture according to claim 1, wherein the compound (ii) is a quaternary amino compound which does not have a hydrophilic end group.

4. The mixture according to claim 1, wherein the compound (ii) is stearylbenzyldimethylammonium with counteranion.

5. A process for producing polyurethanes comprising sheet silicates by reacting
(a) isocyanates with
(b) compounds having hydrogen atoms which are reactive toward isocyanate groups,
wherein a mixture according to any of claims 1 to 4 is used for the reaction.

6. A polyurethane obtainable by a process according to claim 5.

7. An elastomeric polyurethane according to claim 6 having a density in the range from 15 kg/m³ to 1250 kg/m³.

8. A casting resin or rigid foam based on polyurethanes according to claim 6.

## Revendications

1. Mélange contenant (a) des silicates en couches (i) modifiés, dans lequel on insère au moins un composé (ii) qui ne présente aucun atome d'hydrogène réagissant aux groupes isocyanate, (b) des composés avec des atomes d'hydrogène réagissant aux groupes isocyanate, **caractérisé en ce que** le composé (b) est un polyétheralcool d'un poids moléculaire supérieur à 2000 g/mol, qui présente un bloc terminal à base d'oxyde d'éthylène, et la partie en poids du bloc terminal à base d'oxyde d'éthylène sur le poids total du polyétheralcool étant de 10 à 30% en poids et le composé (II) étant un composé amino quaternaire.

2. Mélange selon la revendication 1, **caracterisé en ce que** le polyétheralcool (b) est un copolymère à bloc à base d'oxyde de propylène avec bloc de fin de chaîne à base d'oxyde d'éthylène.

3. Mélange selon la revendication 1, **caractérisé en ce que** le composé (ii) est un composé amino quaternaire sans groupe terminal hydrophile.

4. Mélange selon la revendication 1, **caractérisé en ce que** le composé (ii) est un stéarylbenzyldiméthylammonium avec contre-anion.

5. Procédé de fabrication de polyuréthannes contenant des silicates en couches par réaction :
(a) d'isocyanates avec
(b) des composés ayant des atomes d'hydrogène réagissant aux groupes isocyanate,
**caractérisé en ce qu'**on utilise pour la réaction un mélange selon l'une des revendications 1 à 4.

6. Polyuréthannes qu'on obtient par un procédé selon la revendication 5.

7. Polyuréthannes élastomères selon la revendication 6, avec une densité entre 15 kg/m³ et 1250 kg/m³.

8. Résines à couler ou mousses durcies à base de polyuréthannes selon la revendication 6.
